Europäisches Patentamt

European Patent Office

Office européen des brevets

(19)

(11) Publication number: **0 280 291**
**B1**

## (12) EUROPEAN PATENT SPECIFICATION

(45) Date of publication of the patent specification:
05.09.90

(21) Application number: **88102788.2**

(22) Date of filing: **25.02.88**

(51) Int. Cl.⁵: **F16K 5/06, F16K 5/08**

(54) Ball valves with outlet for eliminating residuals.

(30) Priority: **25.02.87 IT 2095187**

(43) Date of publication of application:
**31.08.88 Bulletin 88/35**

(45) Publication of the grant of the patent:
**05.09.90 Bulletin 90/36**

(84) Designated Contracting States:
**BE DE FR GR NL**

(56) References cited:
**DE-A- 3 248 704**
**FR-A- 2 196 699**
**GB-A- 1 200 203**
**US-A- 4 577 662**

(73) Proprietor: **OFFICINA MECCANICA PAGANI ALDO,
Via 1. Maggio, 87 Casoni di Gariga, I-29027 Podenzano
(Piacenza)(IT)**

(72) Inventor: **Pagani, Aldo, Casoni di Gariga,,
I-29027 Podenzano (PC)(IT)**

(74) Representative: **Dr. Ing. A. Racheli & C., Viale San
Michele del Carso, 4, I-20144 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns ball valves generally used to control a liquid flow.

In the known type of ball valves the liquids that pass through the device may exit and are retained in the cavities provided between the sealing gaskets and the plug seat. This fact may cause many inconveniences. We can take the example of liquid foods (oil, milk, wine etc.) the residuals of which, when retained in the sealing gaskets for some time, acidify and when a new liquid is passed through, starts a process of acidification with consequent serious damages to the production.

Until today, such an inconvenience has been avoided by a threaded opening at the bottom of the valve which is then closed with a plug. After every stop the valve is cleaned by unscrewing the plug, after this cleaning the plug is screwed down again. However, this procedure involves a loss of time and serious difficulties whenever the valve is not in an easily accessible position. Therefore, the actual cleaning procedure still remains an operation subject to human error.

DE-A 3 248 704 discloses a valve wherein channels are provided which are in communication with a cavity defined by the seals, the casing and the plug, in the open position of the valve. The channels bring the inlet and outlet sides of the valve into flow communication in order to flush the valve chamber.

US-A 4 577 662 discloses a valve wherein a toroidal hollow or cavity between the plug and the casing communicates with the inlet and outlet sides of the valve through channels.

Both cited documents do not allow for an automatic draining or cleaning of the cavity defined by the casing, the seals, and the plug.

The aim of this invention is to make the cleaning of the valve automatic.

The above-mentioned aim is reached by providing a duct in the casing of the ball valve which connects the bottom of the cavity existing between the sealing gaskets and the valve casing, with the outlet of the spherical plug, extending said duct in a subhorizontal direction, that is, slightly inclined to aid emptying.

Preferably, the duct can be partially extended to an intermediate ring that would be connected between the valve and the tube.

In this case, the present invention is also applicable to the known type of valves, this consisting of a modification of the same, and precisely, the formation of a duct and the addition of an intermediate collar on the outlet of the valve.

The advantage offered by a valve according to the invention or by a valve modified according to the invention, is the guarantee of a valve which is always free of residuals without having to intervene from the outside.

This invention is illustrated in the attached drawings, in which:

Fig. 1 shows a lateral view of a two-way ball valve with outlet for eliminating residuals;

Fig. 2 shows a lateral view of a two-way ball valve with outlet for eliminating residuals;

Fig. 3 shows a section taken along line 3-3 of fig. 4;

Fig. 4 shows the known type of ball valve, modified to have an outlet for eliminating residuals.

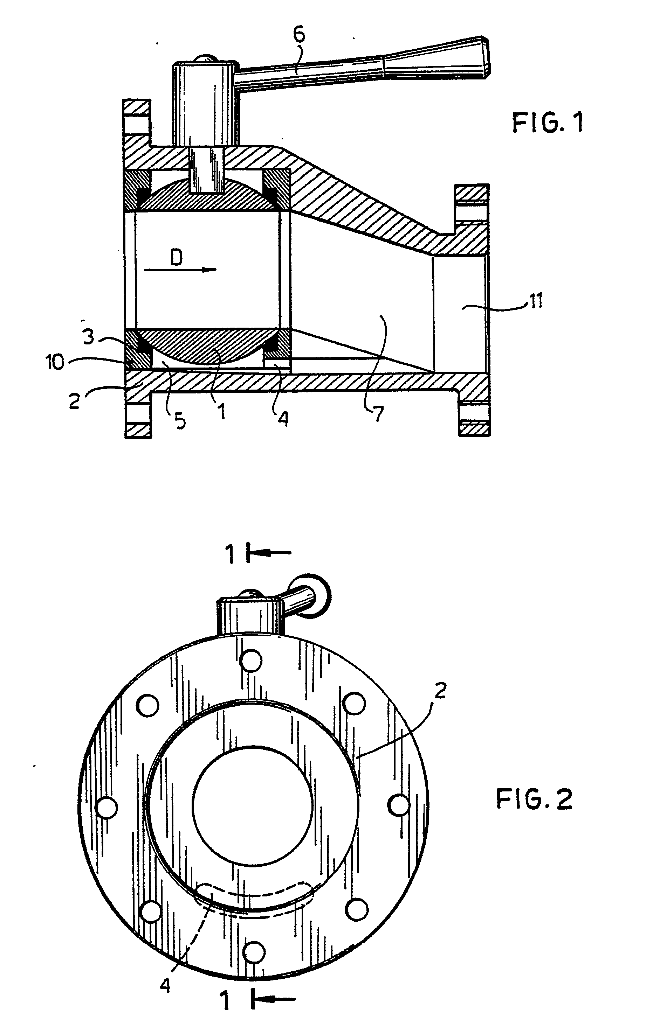

A ball valve is shown in figs. 1 and 2, workable by means of a control lever 6 so as to regulate the passing of a liquid, with a spherical plug 1 located in a seat 10, arranged in a valve casing 2. The seal is accomplished by gaskets 3. The valve is completed by a portion of casing 7 positioned on the side of the outlet (the side to which arrow D is pointing). A possible infiltration of the liquid through the gaskets 3 in the cavity 5 between the casing 2 and the plug 1, has the possibility of exiting through duct 4 that connects the cavity 5 and the outlet 11 of the valve. Said duct 4 can be extended both in the seat 10 and in the valve casing and has large enough dimensions so as to allow the immediate and continuous outlet of the liquid and therefore the automatic cleaning of the cavity 5. Moreover, this is slightly inclined with respect to the horizontal.

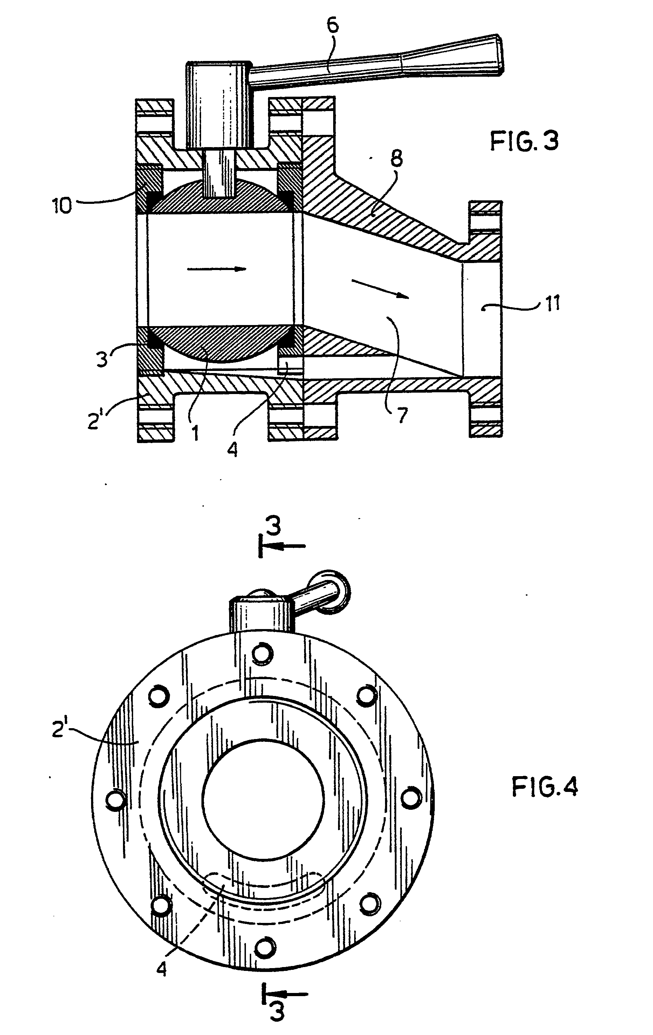

In figures 3 and 4 it is shown how it is possible to modify the type of known two-way valve so that a valve is formed with an outlet for eliminating the residuals. The modifications fundamentally consist of effecting an opening 4 in the casing valve 2' or in the respective seat 10 and adding an intermediate collar 8 that has the same functions as the casing portion 7.

## Claims

1. A ball valve comprising a valve casing (2), a spherical plug having a substantially horizontal flow passageway bore and being mounted rotatably between an upstream seat (10) and a downstream seat, said plug (1) being in permanent sealing contact with said seats (10), a cavity (5) being defined by the space enclosed within the seats, the plug, and the valve casing characterized in that the downstream part of the valve casing (2) or the downstream seat (10) is provided with a duct (4), that extends substantially in a direction parallel to the fluid flow passageway of the valve and connects the bottom of the cavity (5) directly with the outlet (11) of the valve, in that said duct (4) extends in the downstream direction beyond the downstream seat into a complementary portion (7) of the casing (2), in that said duct is at least slightly inclined with respect to the horizontal and downwardly in direction to the outlet (11) and has large enough dimensions, so that a continuous and immediate outflow of the fluid contained in said cavity (5) is allowed enabling the automatic cleaning of said cavity (5).

2. A valve according to Claim 1, characterized in that said complementary portion (7) of the casing (2) is formed by an intermediate collar (8) connected to the casing (2), said duct (4) extending partially through said collar (8).

## Patentansprüche

1. Kugelventil mit einem Ventilkörper (2), einem Kugelverschluß, der eine im wesentlichen waagrechte Durchflußöffnung aufweist und zwischen einem oberen Sitz (10) und einem unteren Sitz drehbar montiert ist, wobei der Verschluß (1) mit den Sitzen (10) abdichtend in Berührung steht und eine Aushöhlung (5) in dem zwischen den Sitzen befindlichen Raum begrenzt ist; der Verschluß und der Ventilkörper sind dadurch gekennzeichnet, daß der Teil unter dem Ventilkörper (2) oder dem unteren Sitz (10) mit einem Kanal (4) versehen ist, der sich im wesentlichen parallel zum Flüssigkeitsdurchfluß des Ventils erstreckt und den Boden der Aushöhlung (5) unmittelbar mit dem Ventilausgang (11) verbindet, daß sich der Kanal (4) unten über den unteren Sitz in einen zusätzlichen Teil (7) des Körpers (2) erstreckt, daß der Kanal gegenüber der Waagrechten zum Ausgang (11) leicht geneigt ist und genügend groß bemessen ist, um einen kontinuierlichen und sofortigen Ausgang der in der Aushöhlung (5) enthaltenen Flüssigkeit zu ermöglichen, wodurch die selbsttätige Reinigung der Aushöhlung (5) erfolgt.

2. Ventil nach Anspruch 1, dadurch gekennzeichnet, daß der zusätzliche Teil (7) des Körpers (2) einen mit dem Körper (2) verbundenen Zwischenkragen (8) aufweist, wobei der Kanal (4) sich teilweise über den Kragen (8) erstreckt.

## Revendications

1. Soupape sphérique comprenant un corps soupape (2), un obturateur sphérique qui présente un trou de passage du flux pratiquement horizontal et qui est monté tournant entre un siège en amont (10) et un siège en aval, ledit obturateur (1) étant en contact de tenue permanent avec lesdits sièges (10), une cavité (5) étant définie par l'espace compris entre les sièges, l'obturateur et le corps soupape caractérisée en ce que la partie en aval du corps soupape (2) ou le siège en aval (10) est muni d'un canal (4), qui s'étend pratiquement de façon parallèle par rapport au passage du flux du fluide de la soupape et qui relie le fond de la cavité (5) directement avec la sortie (11) de la soupape; en ce que ledit canal (4) s'étend en aval au-delà du siège en aval dans une partie complémentaire (7) du corps (2); en ce que ledit canal est au moins légèrement incliné par rapport à l'horizontale et en aval, vers la sortie (11) et qu'il a des dimensions assez grandes, si bien qu'est permise une sortie continue et immédiate du fluide contenu dans ladite cavité (5), ce qui rend possible le nettoyage automatique de ladite cavité (5).

2. Soupape selon la revendication 1, caractérisée en ce que ladite partie complémentaire (7) du corps (2) est formée d'un collet intermédiaire (8) relié au corps (2), ledit canal (4) s'étendant partiellement à travers ledit collet (8).

FIG. 1

FIG. 2

FIG. 3

FIG.4